Europäisches Patentamt

European Patent Office

Office européen des brevets

(19)

(11) **EP 0 650 430 B1**

(12) **EUROPÄISCHE PATENTSCHRIFT**

(45) Veröffentlichungstag und Bekanntmachung des Hinweises auf die Patenterteilung:
  **28.02.1996 Patentblatt 1996/09**

(51) Int. Cl.⁶: **B62D 11/18**

(86) Internationale Anmeldenummer: **PCT/EP93/01821**

(21) Anmeldenummer: 93915883.8

(22) Anmeldetag: **12.07.1993**

(87) Internationale Veröffentlichungsnummer: **WO 94/02346 (03.02.1994 Gazette 1994/04)**

(54) **STEUER-UND REGELVORRICHTUNG FÜR EINEN FAHRZEUG-FAHRANTRIEB**

CONTROL DEVICE FOR A VEHICLE PROPULSION DRIVE

DISPOSITIF DE COMMANDE ET DE REGLAGE D'UN GROUPE PROPULSEUR DE VEHICULE

(84) Benannte Vertragsstaaten:
  **AT DE FR GB IT SE**

(30) Priorität: **23.07.1992 DE 4224359**

(43) Veröffentlichungstag der Anmeldung:
  **03.05.1995 Patentblatt 1995/18**

(73) Patentinhaber: **BRUENINGHAUS HYDROMATIK GMBH**
  **D-89275 Elchingen (DE)**

(72) Erfinder:
  • **LEIBING, Karl-Heinz**
    **D-89547 Gerstetten-Dettingen (DE)**
  • **HANSEN, Kai-Uwe**
    **D-89297 Biberach (DE)**
  • **VONNOE, Reinhard**
    **D-89264 Weissenhorn (DE)**

(74) Vertreter: **Körber, Wolfhart, Dr. rer.nat. et al**
  **D-80331 München (DE)**

(56) Entgegenhaltungen:
  **EP-A- 0 151 207**       **DE-A- 253 073**
  **DE-A- 2 053 092**      **US-A- 4 175 628**

## Beschreibung

Die Erfindung betrifft eine Steuer- und Regelvorrichtung für einen Fahrzeug-Fahrantrieb nach dem Oberbegriff des Patentanspruchs 1.

Aus der DE-PS 25 37 073 ist eine derartige Vorrichtung bekannt, deren Sollwert-Vorgabe drei Steuerhebel aufweist, von denen einer zur Vorgabe der Fahrgeschwindigkeit und jeder der beiden anderen zur Lenkung durch Reduzierung des Übersetzungsverhältnisses des jeweils kurveninneren hydrostatischen Getriebes dient. Diese Art der Lenkung weist den Nachteil unerwünschter Änderungen der Fahrgeschwindigkeit und damit des Leistungsbedarfs des Antriebsmotors mit der Folge einer Entlastung oder Drückung desselben bei Kurvenfahrt auf.

Die bekannte Steuer-und Regelvorrichtung umfaßt ferner eine Gleichlaufregelung, die dazu dient, beim Auftreten von äußeren Störgrößen die jeweils vorgegebenen Übersetzungsverhältnisse der hydrostatischen Getriebe aufrechtzuerhalten. Diese Gleichlaufregelung tritt jedoch nur bei Geradeausfahrt in Kraft, so daß bei Kurvenfahrt auftretende Störgrößen, wie etwa unterschiedliche Belastungen beider hydrostatischer Getriebe, ungewollte Änderungen des Lenkradius und der Fahrgeschwindigkeit hervorrufen. Des weiteren weist die bekannte Steuer- und Regelvorrichtung eine Grenzlastregelung auf, die der Gleichlaufregelung vorgeschaltet ist und somit über Änderungen der Steuersignale auf die Verstelleinrichtungen der beiden hydrostatischen Getriebe einwirkt. Da im allgemeinen aus Stabilitätsgründen ein relativ langsames Führungsverhalten in der Gleichlaufregelung eingestellt ist, kann es zu dynamischen Überbelastungen des Antriebsmotors und sogar zum Abbremsen desselben bis zum Stillstand kommen.

Es ist Aufgabe der Erfindung eine Steuer- und Regelvorrichtung der eingangs genannten Art so weiterzubilden, daß ungewollte Änderungen der Fahrgeschwindigkeit verhindert werden.

Diese Aufgabe wird durch die kennzeichnenden Merkmale des Patentanspruchs 1 gelöst. Nach Bildung des min./max.-Fensters aus den mittels der Steuerhebel vorgegebenen Sollwerten der Übersetzungsverhältnisse der hydrostatischen Getriebe stellt die erfindungsgemäße Steuer- und Regelvorrichtung durch Vergleich des der Fahrgeschwindigkeit entsprechenden Mittelwertes der vor der Bildung des min./max.-Fensters ausgegebenen Steuersignale mit dem Minimal- und dem Maximalwert des min./max.-Fensters fest, ob die bisherige Fahrgeschwindigkeit aufrechterhalten oder zu ändern ist. Im ersteren Fall, der dann vorliegt, wenn sich der Mittelwert der vor der Bildung des min./max.-Fensters ausgegebenen Steuersignale innerhalb des min./max.-Fensters befindet, werden die auszugebenden Steuersignale durch Addition bzw. Subtraktion der Differenz der Sollwertsignale zum bzw. vom Mittelwert der vor der Bildung des min./max.-Fensters ausgegebenen Steuersignale ermittelt. Im letzten Fall, der dann vorliegt, wenn sich der Mittelwert der vor der Bildung des min./max.-Fensters ausgegebenen Steuersignale außerhalb des min./max.-Fensters befindet, werden die vor der Bildung des min./max.-Fensters ausgegebenen Steuersignale durch Addition der Differenz zwischen dem Minimalwert des min./max.-Fensters und dem Mittelwert der vor der Bildung des min./max.-Fensters ausgegebenen Steuersignale zwecks Erhöhung der Fahrgeschwindigkeit bzw. Subtraktion der Differenz zwischen dem vor der Bildung des min./max.-Fensters ausgegebenen Steuersignale und dem Maximalwert des min./max.-Fensters zwecks Reduzierung der Fahrgeschwindigkeit korrigiert. Auf diese Weise werden sowohl bei Geradeausfahrt als auch bei Kurvenfahrt einerseits gewollte Änderungen der Fahrgeschwindigkeit ermöglicht, andererseits jedoch ungewollte Änderungen derselben vermieden und dadurch gleichzeitig der Leistungsbedarf des Antriebsmotors weitgehend konstant gehalten bzw. störende Lastwechsel desselben verhindert.

Es sind zwar aus der Praxis sogenannte Einhebelsteuerungen bekannt, bei denen mittels eines einzigen Steuerhebels durch beispielsweise Vorwärts- oder Rückwärtsverschieben desselben die Fahrgeschwindigkeit geändert und durch gleichzeitiges seitliches Verschieben dieses Steuerhebels nach rechts oder links Kurvenfahrten eingeleitet werden können, wobei die jeweils eingestellte Fahrgeschwindigkeit aufrechterhalten wird. Diesem Vorteil der Aufrechterhaltung der Fahrgeschwindigkeit bei Kurvenfahrt steht jedoch der Nachteil gegenüber, daß keine individuelle Steuerung der beiden Antriebsseiten vorgenommen werden kann. Die aus dem Stand der Technik ebenfalls bekannten sogenannten Zweihebelsteuerungen ermöglichen zwar eine individuelle Steuerung der beiden Antriebsseiten, weisen jedoch den Nachteil auf, daß es in der Praxis nahezu unmöglich ist, bei Übergang von der Geradeausfahrt in die Kurvenfahrt die Fahrgeschwindigkeit konstant zu halten.

Die erfindungsgemäße Steuer- und Regelvorrichtung umfaßt ebenfalls eine Zweihebelsteuerung, die jedoch die Vorteile der Einhebelsteuerung, d.h. Aufrechterhaltung der Fahrgeschwindigkeit bei Übergang zur Kurvenfahrt, mit den Vorteilen der herkömmlichen Zweihebelsteuerung, nämlich die individuelle Steuerung der beiden Antriebsseiten und die Visualisierung der jeweiligen Fahrsituation, unter Vermeidung der Nachteile der beiden herkömmlichen Steuerungen kombiniert und damit insbesondere bei Spezialfahrzeugen, wie etwa Schneepistenfahrzeugen, bessere Manövrierfähigkeit erlaubt.

Eine weitere, auch selbstständige Maßnahme zur Lösung der der Erfindung zugrundeliegenden Aufgabe steht in der Anwendung einer Gleichlaufregelung nach dem kennzeichnenden Teil des Patentanspruchs 10, die sowohl bei Geradeausfahrt als auch bei Kurvenfahrt sämtliche Störeinflüsse ausschaltet, die eine Abweichung der Übersetzungsverhältnisse der hydrostatischen Getriebe von den vorgegebenen Sollwerten hervorrufen, und außerdem bei Verwendung einer nachgeschalteten Grenzlastregelung nach Patentanspruch 11 deren zeitlich unverzögerten Eingriff erlaubt.

Weitere Merkmale und Vorteile der Erfindung ergeben sich aus den verbleibenden Unteransprüchen.

Nachstehend ist die Erfindung anhand eines bevorzugten Ausführungsbeispieles unter Bezugnahme auf die Zeichnung näher beschrieben. Es zeigen

Fig. 1      in schematischer Darstellung einen Fahrzeug-Fahrantrieb mit der Steuer- und Regelvorrichtung nach dem bevorzugten Ausführungsbeispiel der Erfindung,

Fig. 2      ein Blockschema der Steuer- und Regelvorrichtung nach Fig. 1, einschließlich eines Steuerungsteils, und

Fig. 3 bis 6      in schematischer Darstellung verschiedene Stellungen von Steuerhebeln der Steuer- und Regelvorrichtung nach Fig. 1 sowie daraus mittels des Steuerungsteils nach Fig. 2 abgeleitete Steuersignale.

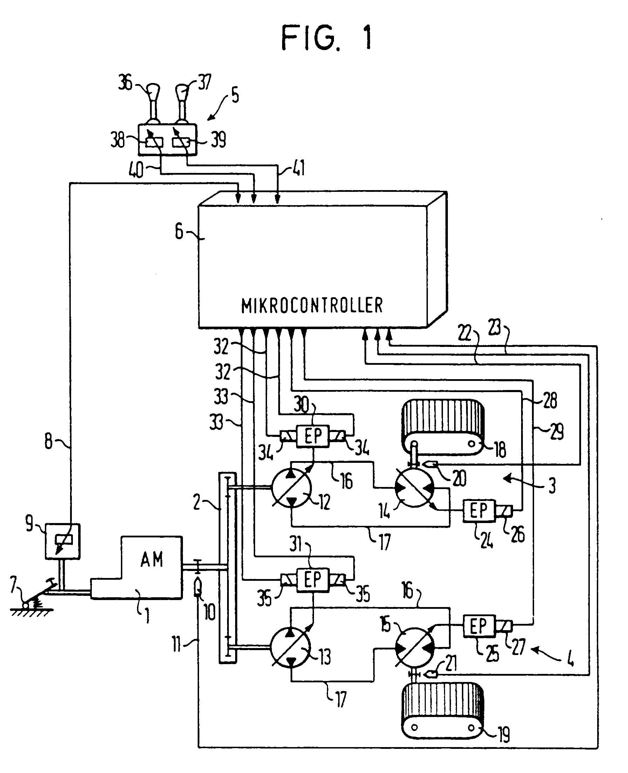

Der in Fig. 1 dargestellte Fahrzeug-Fahrantrieb umfaßt einen Antriebsmotor 1 , ein Verteilergetriebe 2, zwei hydrostatische Getriebe 3, 4 sowie eine Steuer- und Regelvorrichtung mit einer Sollwert-Vorgabe 5 und einem programmierbaren Mikrocontroller 6.

Der Antriebsmotor 1 ist ein Dieselmotor mit verstellbarer Drehzahl und zu diesem Zweck mit einem Gaspedal 7 zur Vorgabe der Solldrehzahl versehen. Ein über eine Steuerleitung 8 an den Mikrocontroller 6 angeschlossenes Potentiometer 9 ist zur Erfassung der jeweiligen Stellung des Gaspedals 7 vorgesehen. Ein Drehzahl-Sensor 10 zur Erfassung der sich tatsächlich einstellenden Drehzahl des Antriebsmotors 1 ist über eine Steuerleitung 11 an den Mikrocontroller 6 angeschlossen.

Jedes hydrostatische Getriebe 3, 4 umfaßt eine über das Verteilergetriebe 2 vom Antriebsmotor 1 parallel antreibbare Hydropumpe 12 bzw. 13 sowie einen Hydromotor 14 bzw. 15, der über zwei Arbeitsleitungen 16, 17 an die Hydropumpe 12 bzw. 13 angeschlossen ist und mit einer linken bzw. rechten Kettenanordnung 18, 19 des Fahrzeugs in Antriebsverbindung steht. Je ein Drehzahl-Sensor 20, 21 zur Erfassung der Abtriebsdrehzahlen $n_{list}$, $n_{rist}$ der Hydromotoren 14, 15 ist über je eine Steuerleitung 22 bzw. 23 mit dem Mikrocontroller 6 verbunden. Beide Drehzahl-Sensoren 20, 21 arbeiten nach dem Hall-Prinzip und können somit auch niedrigste Drehzahlen erfassen.

Die Hydropumpen 12, 13 sind reversierbare Verstellpumpen und weisen ebenso wie die als Verstellmotoren ausgebildete Hydromotoren 14, 15 zwei Strömungsrichtungen auf. Sämtliche Hydromaschinen 12 bis 15 sind zwecks Verstellung ihres Verdrängungsvolumens mit je einer Verstelleinrichtung versehen. Jede der den Hydromotoren 14, 15 zugeordnete Verstelleinrichtung 24 bzw. 25 umfaßt einen elektrischen Proportionalmagneten 26 bzw. 27, der über eine linke bzw. rechte Steuersignalleitung 28, 29 mit dem Mikrocontroller 6 verbunden und von diesem mit Steuersignalen $v_l$ bzw. $v_r$ ansteuerbar ist. Diese Steuersignale $v_l$ , $v_r$ werden in einen hydraulischen Steuerdruck mit direkter Wirkung auf den nicht gezeigten Stellzylinder des jeweiligen Hydromotors 14, 15 umgewandelt. Die Verstelleinrichtungen 30, 31 für die Hydropumpen 12 bzw. 13 entsprechen prinzipiell der soeben beschriebenen Ansteuerung der Hydromotoren 14, 15, umfassen jedoch jeweils zwei über je eine Steuersignalleitung 32 bzw. 33 vom Mikrocontroller 6 ebenfalls mit Steuersignalen $v_l$, $v_r$ ansteuerbare Proportionalmagneten 34 bzw. 35, einen für die Vorwärtsfahrt und einen für die Rückwärtsfahrt des Fahrzeugs.

Die Sollwertvorgabe 5 umfaßt einen linken und einen rechten Steuerhebel 36 bzw. 37, die beide zwecks Vorgabe von Sollwerten des Übersetzungsverhältnisses des linken bzw. rechten hydrostatischen Getriebes 3, 4 innerhalb eines positiven Verstellbereichs +B (entsprechend der Vorwärtsfahrt des Fahrzeugs) und innerhalb eines negativen Verstellbereichs -B (entsprechend der Rückwärtsfahrt des Fahrzeuges) verstellbar sind. Zur Erfassung des jeweiligen, auf eine die Verstellbereiche +B und -B trennende Null-Linie N bezogenen Verstellweges der Steuerhebel 36, 37 und zur Erzeugung. entsprechender Sollwertsignale $s_l$, $s_r$ ist je ein Potentiometer 38, 39 vorgesehen, das über je eine Sollwert-Signalleitung 40 bzw. 41 an eine Steuerlogik "erste Signalverarbeitung 42" des Mikrocontrollers 6 angeschlossen ist. Der Einfachheithalber dienen die Bezugszeichen $s_l$, $s_r$ der Sollwert-Signale gleichzeitig auch zur Kennzeichnung der Verstellwege der beiden Steuerhebel 36, 37. Der Arbeitsbereich beider Potentiometer 38, 39 ist in jeweils drei Bereiche unterteilt, nämlich einen kleinen Bereich für die Geradeausfahrt zur sicheren Reproduzierbarkeit, einen Lenkbereich für engere Kurven mit zunehmender Potentiometerauslenkung bis zum Stillstand einer der beiden Kettenanordnungen 18, 19 sowie einen Bereich für Kettengegenlauf, der bis zur Maximalstellung mit gegenlaufenden Ketten bei gleichen Antriebsdrehzahlen reicht.

Die erste Signalverarbeitung 42 dient zur Verarbeitung der Sollwert-Signale $s_l$, $s_r$ zu den Steuersignalen $v_l$, $v_r$ und stellt gemeinsam mit einer im Mikrocontroller 6 nachgeschalteten Steuerlogik "zweite Signalverarbeitung 43" zur weiteren Verarbeitung der Steuersignale $v_l$, $v_r$ sowie der Sollwert-Vorgabe 5 den Steuerungsteil der Steuer- und Regelvorrichtung dar, deren Regelungsteil innerhalb des Mikrocontrollers 6 angeordnet ist und eine Regellogik "Gleichlaufregelung 44" sowie eine weitere Regellogik "Grenzlastregelung 45" umfaßt.

Die Gleichlaufregelung 44 dient zur Ausschaltung von Störeinflüssen, die Abweichungen der Übersetzungsverhältnisse der hydrostatischen Getriebe 3, 4 von den den Steuersignalen $v_l$, $v_r$ entsprechenden Werten

hervorrufen würden. Die Funktion der Grenzlastregelung 45 besteht darin, bei Überlastung des Antriebsmotors 1 die Übersetzungsverhältnisse der hydrostatischen Getriebe 3, 4 zu vergrößern.

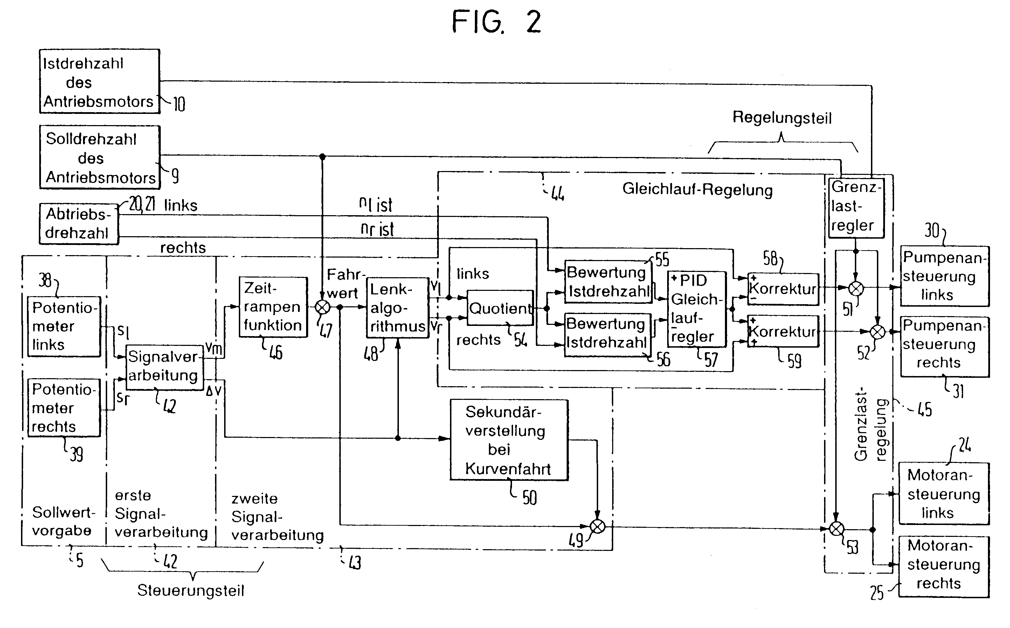

Unter Bezugnahme auf Fig. 2 ist nachstehend zunächst die Funktion der zweiten Signalverarbeitung 43, der Gleichlaufregelung 44 und der Grenzlastregelung 45 beschrieben:
Die erste Signalverarbeitung 42 ermittelt aus den Sollwert-Signalen $s_l$, $s_r$ in noch zu beschreibender Weise die Steuersignale $v_l$, $v_r$ und aus diesen einen Steuersignal-Mittelwert $v_m = (v_l + v_r)/2$, der der Fahrgeschwindigkeit des Fahrzeugs bezogen auf dessen Längsmittelachse entspricht, sowie als Lenkinformation die Differenz $\Delta v$ der beiden Steuersignale $v_l$, $v_r$. Beide Signale $v_m$ und $\Delta v$ werden an die zweite Signalverarbeitung 43 ausgegeben, in der das Signal $v_m$ über eine Zeitrampenfunktion 46 verzögert, anschließend an einer Multiplikationsstelle 47 durch das vom Gaspedal 7 vorgegebene Solldrehzahl-Signal des Antriebsmotors 1 modifiziert und sodann zum einen einem Lenkalgorithmus 48 zugeführt und zum anderen über eine Multiplikationsstelle 49 und die Grenzlastregelung 45 an die Verstelleinrichtungen 24, 25 der Hydromotoren 14, 15 beider hydrostatischen Getriebe 3, 4 ausgegeben wird.

Die Lenkinformation $\Delta v$ wird unverzögert innerhalb der zweiten Signalverarbeitung 43 sowohl dem Lenkalgorithmus 48 als auch einer Steuerlogikschaltung "Sekundärverstellung bei Kurvenfahrt 50" gemeldet. Der Lenkalgorithmus 48 rechnet die Signale $\Delta v$ und $v_m$ auf die Steuersignale $v_l$ und $v_r$ zurück, die nun über die Gleichlaufregelung 44 und die Grenzlastregelung 45 den Verstelleinrichtungen 30, 31 der Hydropumpen 12, 13 beider hydrostatischen Getriebe 3, 4 zugeführt werden. Bei Überschreiten eines vorbestimmten Wertes der Lenkinformation $\Delta v$ greift die Steuerlogikschaltung 50 in die Ansteuerung der Verstelleinrichtungen 24, 25 der Hydromotoren 14, 15 zwecks Ausschwenken derselben in Richtung größeren Verdrängungsvolumens durch Ausgabe eines entsprechenden Signals ein, das den Steuersignal-Mittelwert $v_m$ an der Multiplikationsstelle 49 entsprechend korrigiert.

Bei Überschreiten einer vorgegebenen Überlastung des Antriebsmotors 1, die durch Differenzbildung der mit dem Gaspedal 7 vorgegebenen Solldrehzahl und der mit dem Drehzahl-Sensor 10 gemessenen tatsächlichen Drehzahl des Antriebsmotors 1 ermittelt wird, greift die Grenzlastregelung 45 in die Ansteuerung der Verstelleinrichtungen 30, 31 der Hydropumpen 12, 13 als auch der Verstelleinrichtungen 24, 25 der Hydromotoren 14, 15 durch Ausgabe eines entsprechenden Signals ein, das über je eine Multiplikationsstelle 51, 52 bzw. 53 die von der Gleichlaufregelung 44 und die von der zweiten Signalverarbeitung 43 über die Multiplikationsstelle 49 ausgegebenen Steuersignale $v_l$, $v_r$, bzw. $v_m$ korrigiert.

Aus den vom Lenkalgorithmus 48 der ersten Signalverabeitung 42 abgegebenen Steuersignalen $v_l$, $v_r$ werden in einer Quotientenbildungsstelle 54 der zweiten Signalverarbeitung 43 der Quotient $v_l/v_r$ und dessen Kehrwert gebildet. Dieser Quotient und dessen Kehrwert werden in Bewertungsstellen 55, 56 zur Bewertung der Abtriebsdrehzahlen $n_{list}$, $n_{rist}$ der beiden Hydromotoren 14, 15 nach folgenden Gleichungen benutzt:

$$n_l = n_{list} \times v_r/v_l \text{ für Rechtskurven und}$$

$$n_r = n_{rist} \times v_l/v_r \text{ für Linkskurven.}$$

Die so bewerteten Abtriebsdrehzahlen $n_l$, $n_r$ der beiden Hydromotoren 14, 15 sollen sowohl bei Geradeausfahrt als auch bei Kurvenfahrt gleich dem gemessenen *ist*-Wert der Abtriebsdrehzahl $n_{rist}$ bzw. $n_{list}$ des jeweils anderen Hydromotors sein. Dementsprechend werden in einem PID-Gleichlaufregler 57 der zweiten Signalverarbeitung 43 die Differenzen $\Delta n_l$ und $\Delta n_r$ nach den Gleichungen:

$$\Delta n_l = n_l - n_{rist} \text{ für Rechtskurven und}$$

$$\Delta n_r = n_r - n_{list} \text{ für Linkskurven}$$

gebildet und bei Überschreiten des Wertes Null an Korrekturstellen 58, 59 in der zweiten Signalverarbeitung 43 zur Korrektur der vom Lenkalgorithmus 48 abgegebenen Steuersignale $v_l$, $v_r$ verwendet. Dabei können drei verschiedene Korrekturstrategien verfolgt werden, nämlich Verzögern des Hydromotors 14 oder 15 mit der jeweils höheren Abtriebsdrehzahl $n_{list}$ bzw. $n_{rist}$ durch Zurückschwenken der zugeordeneten Hydropumpe 12 bzw. 13 in Richtung kleineren Verdrängungsvolumens, Beschleunigen des Hydromotors 14 oder 15 mit der jeweils geringeren Drehzahl $n_{list}$ bzw. $n_{rist}$ durch Ausschwenken der zugeordneten Hydropumpe 12 bzw. 13 in Richtung größeren Verdrängungsvolumens, oder Kombinieren der beiden vorgenannten Korrekturstrategien, d.h. Beschleunigen des einen und Verzögerung des anderen Hydromotors.

Unter Bezugnahme auf die Fig. 2 bis 6 ist nachstehend die Funktion der Sollwert-Vorgabe 5 und der ersten Signalverarbeitung 42 erläutert:
Bei Stillstand des Fahrzeugs läuft der Antriebsmotor 1 mit Leerlaufdrehzahl und die Steuerhebel 36, 37 befinden sich in ihrer Nullstellung, d.h. in paralleler Lage auf der Null-Linie N, so daß keine Sollwertsignale $s_l$, $s_r$ erzeugt werden und dementsprechend die Hydropumpen 12, 13 auf minimales Verdrängungsvolumen und die Hydromotoren 14, 15 auf maximales Verdrängungsvolumen eingestellt sind. Um das Fahrzeug nach vorwärts oder nach rückwärts in Bewegung zu setzen, ist sowohl eine Erhöhung der Drehzahl des Antriebsmotors 1 mittels entsprechender Verstellung des Gaspedals 7 als auch eine Verstellung der Steuerhebel 36, 37 bei Vorwärtsfahrt in den positiven Verstellbereich +B und bei Rückwärtsfahrt in den negativen Verstellbereich -B erforderlich. Die von dem Potentiometer 38, 39 entsprechend dem jeweiligen Verstellweg $s_l$, $s_r$ der beiden Steuerhebel 36, 37 erzeugten Sollwert-Signale $s_l$, $s_r$ werden der ersten Signalverarbeitung 42 zugeführt und dort wie folgt verarbeitet:

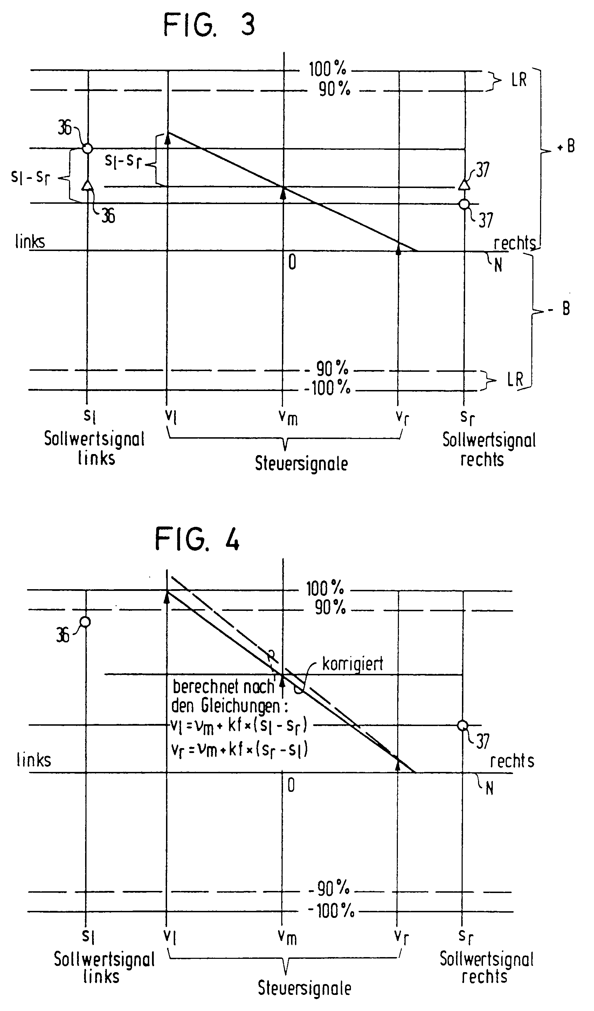

In einem ersten Signalverarbeitungsschritt erfolgt eine Begrenzung der Sollwertsignale $s_l$, $s_r$ auf je einen Höchstwert von etwa 90% des dem maximalen Verstellweg der Steuerhebel 36, 37 entsprechenden Maximalwertes von 100%, der dem maximalen Übersetzungsverhältnis der hydrostatischen Getriebe 3, 4 entspricht. Mit anderen Worten, die bei maximaler Verstellung der Steuerhebel 36, 37 (100% Verstellweg) entsprechend der jeweiligen Drehzahl des Antriebsmotors 1 erzielbare maximale Fahrgeschwindigkeit ist bereits bei etwa 90% der Übersetzungsverhältnisse erreicht. Auf diese Weise verbleibt eine etwa 10%-ige Lenkreserve LR (siehe Fig. 3), bei deren Ausnutzung die noch zu beschreibende Lenkstrategie bis zu einem gewissen Kurvenradius erfüllt werden kann und erst bei engeren Kurven und vollständig ausgeschwenkten bzw. zurückgeschwenkten Hydromaschinen 12 bis 15 die Fahrgeschwindigkeit reduziert wird.

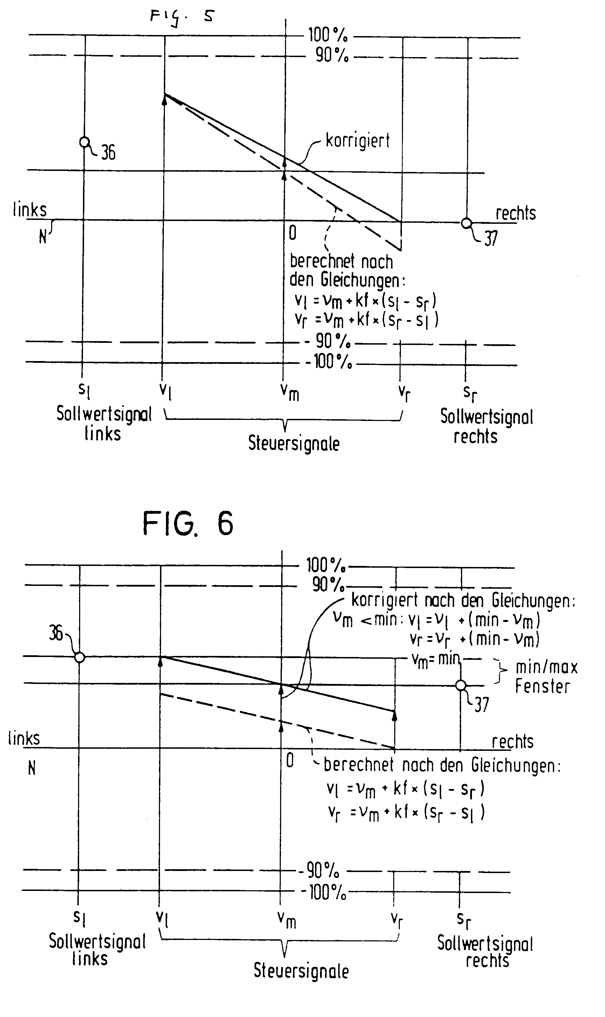

Im nächsten Signalverarbeitungsschritt wird aus den auf 90% begrenzten Sollwertsignalen $s_l$, $s_r$ ein min./max.-Fenster, wie es in Fig. 6 dargestellt ist, nach den Beziehungen:

$$\text{min.} = \text{Minimum } (s_l, s_r)$$

$$\text{max.} = \text{Maximum } (s_l, s_r)$$

gebildet, wobei das Sollwertsignal $s_l$ und $s_r$ mit dem jeweils niedrigeren Wert den Minimalwert und das Sollwertsignal $s_r$ oder $s_l$ mit dem jeweils höheren Wert den Maximalwert des min./max.-Fensters darstellt.

Da der Mittelwert $v_m = (v_l + v_r)/2$ der in einem vorhergehenden Signalverarbeitungsschritt ermittelten Steuersignale $v_l$, $v_r$ entsprechend dem Stillstand des Fahrzeugs gleich Null ist und deshalb außerhalb des gebildeten min./max.-Fensters liegt, werden die auszugebenden Steuersignale $v_l$, $v_r$ nach folgenden Gleichungen ermittelt:

$$v_m < \text{min.}: v_l = v_l + (\text{min.} - v_m)$$

$$v_r = v_r + (\text{min.} - v_m)$$

$$v_m = \text{min.}$$

Daraus ergeben sich Steuersignale $v_l$, $v_r$ jeweils gleicher Größe und damit ein Ausschwenken der Hydropumpen 12, 13 auf entsprechend größeres Verdrängungsvolumen und gleichzeitiges Zurückschwenken der Hydromotoren 14, 15 auf entsprechend kleineres Verdrängungsvolumen; das Fahrzeug befindet sich in Geradeausfahrt mit einer dem Minimalwert des min./max.-Fensters entsprechenden Fahrgeschwindigkeit. Dies gilt sowohl für die Vorwärts- und für die Rückwärtsfahrt.

In entsprechender Weise ermittelt die erste Signalverarbeitung 42 bei Verstellung beider Steuerhebel 36, 37 ausgehend von einer um den jeweils gleichen Verstellweg $s_l$, $s_r$ von der Null-Linie N entfernten Stellung in Richtung der Null-Linie N die auszugebenden Steuersignale $v_l$, $v_r$ nach den Gleichungen :

$$v_m > \text{max.}: v_l = v_l - (v_m - \text{max.})$$

$$v_r = v_r - (v_m - \text{max.})$$

$$v_m = \text{max.}$$

In diesem Falle ergibt sich Geradeausfahrt des Fahrzeugs mit einer dem Maximalwert des min./max.-Fensters entsprechenden Fahrgeschwindigkeit.

Zur Lenkung des Fahrzeugs durch Kurven ohne Änderung der Fahrgeschwindigkeit ist es lediglich erforderlich, einen der beiden Steuerhebel 36, 37 zu verstellen. In diesem Fall ermittelt die erste Signalverarbeitung 42 die auszugebenden Steuersignale $v_l$, $v_r$ nach den Gleichungen

$$v_l = v_m + \text{kf} \times (s_l - s_r) \text{ und}$$

$$v_r = v_m + \text{kf} \times (s_r - s_l),$$

wobei kf der für die Stärke des Lenkeinflusses maßgebende Lenkfaktor und im Normalfall gleich 1 ist.

Diese Gleichungen zeigen, daß die Verstellung lediglich eines der beiden Steuerhebel 36, 37 eine Änderung beider vor der Verstellung dieses Steuerhebels ausgegebenen Steuersignale $v_l$, $v_r$ um jeweils den gleichen Betrag, nämlich die mit dem Lenkfaktor multiplizierte Differenz der nach der Verstellung des Steuerhebels erzeugten Sollwertsignale $s_l$, $s_r$ in entgegengesetzten Richtungen und damit eine entsprechende Lenkung und Aufrechterhaltung der Fahrgeschwindigkeit bewirkt. Eine Verstellung beider Steuerhebel 36, 37 in entgegengesetzten Richtungen bewirkt ebenfalls eine Lenkung des Fahrzeugs bei Aufrechterhaltung der Fahrgeschwindigkeit, wie dies in Fig. 3 gezeigt ist anhand der Verstellung beider Steuerhebel 36, 37 in einander entgegengesetzten Richtungen ausgehend von den mit je einem Dreieck bezeichneten Stellungen im gleichen Abstand von der Nullinie N bis zum Erreichen der mit je einem Kreis bezeichneten Stellungen.

Fig. 6 hingegen zeigt eine Änderung (Vergrößerung) der Fahrgeschwindigkeit bei Kurvenfahrt unter Beibehaltung der Steuersignal-Differenz $\Delta v$ anhand der Verstellung beider Steuerhebel 36, 37 aus nicht gezeigten Stellungen, die den mit der gestrichelten Linie dargestellten Signalen $v_l$, $v_r$ und $v_m$ entsprechen, in die mit je einem Kreis markierten Stellungen um einen solchen Verstellweg, daß der Steuersignal-Mittelwert $v_m$ kleiner als der Minimalwert des aus den nach der Verstellung der Steuerhebel 36, 37 erzeugten Sollwertsignalen $s_l$, $s_r$ gebildeten min./max.-Fensters liegt.

Als Ergebnis der vorliegenden Berechnungen kann eines der Steuersignale $v_l$, $v_r$ einen dem Maximalwert der Sollwertsignale $s_l$, $s_r$ entsprechenden Maximalwert überschreiten. In diesem Fall ist es nicht möglich, die Fahrgeschwindigkeit aufrechtzuerhalten. Daher reduziert die erste Signalverarbeitung 42 in einem solchen Fall beide Steuersignale $v_l$, $v_r$ im gleichen Verhältnis nach den Gleichungen:

$$v_l > 1 : v_l = 1; v_r = v_r \times 1 / v_l \text{ und}$$

$$v_r > 1 : v_r = 1; v_l = v_l \times 1 / v_r;$$

auf diese Weise bleibt der vorgegebene Kurvenradius erhalten (siehe Fig. 4).

Ferner kann sich aus den vorstehenden Berechnungen ein Steuersignal $v_l$ oder $v_r$ ergeben, das ein anderes Vorzeichen als das entsprechende Sollwertsignal $s_l$ bzw. $s_r$ aufweist. In diesem Fall wird das betreffende Steuersignal $v_l$ oder $v_r$ nach den Gleichungen:

$$v_l \leq 0 \text{ und } s_l \geq 0 : v_l = 0$$

$$v_r \leq 0 \text{ und } s_r \geq 0 : v_r = 0$$

auf den Wert Null gesetzt, wie dies in Fig. 5 dargestellt ist.

Nach Durchführung dieser Korrekturen ermittelt die erste Signalverarbeitung 42 die Steuersignal-Differenz des $\Delta$ v und den Steuersignal-Mittelwert $v_m$ und gibt diese Signale an die zweite Signalverarbeitung 43 aus.

Bei Kurvenfahrten ist zur Überwindung zusätzlicher Reibungskräfte auf der Kurvenaußenseite ein höheres Antriebsmoment erforderlich. Aus diesem Grunde werden bei enger Kurvenfahrt abhängig vom Lenkradius die Hydromotoren 14, 15 in Richtung größeren Verdrängungsvolumens ausgeschwenkt. Dies geschieht mit Hilfe der Steuerlogikschaltung 50 der weiteren Signalverarbeitung 43, die bei Überschreitung eines vorgegebenen Wertes der Steuersignal-Differenz $\Delta$ v entsprechend einem vorbestimmten Kurvenradius die Verstelleinrichtungen 24, 25 beider Hydromotoren 14, 15 ansteuert, so daß zwar eine Verringerung der Fahrgeschwindigkeit, jedoch keine Änderung des Lenkradius auftritt.

Falls in den Potentiometern 38, 39 ein Fehler durch Kabelbruch oder Kurzschluß auftritt, so hat dies eine ungewollte Lenkbewegung des Fahrzeugs zur Folge. Ebenso führen Fehler in der Ansteuerung der Proportionalmagneten 26, 27 und 34, 35 der Verstelleinrichtungen der Hydromotoren 14, 15 und Hydropumpen 12, 13 zu unkontrollierten Lenkbewegungen des Fahrzeugs. Aus Sicherheitsgründen werden daher die Eingangsbeschaltungen der Potentiometer sowie die Ausgangsbeschaltungen der Proportionalmagneten auf Kurzschluß und Kabelbruch überwacht. In Fehlerfall wird ein Signal erzeugt, das in der Signalverarbeitung weiterverarbeitet wird und zu einer Reduzierung der Fahrgeschwindigkeit auf den Wert Null führt.

Die erfindungsgemäße Steuer- und Regelvorrichtung kann beispielsweise auch für Fahrantriebe mit einem Antriebsmotor konstanter Drehzahl und/oder mit hydrostatischen Getrieben eingesetzt werden, deren Übersetzungsverhältnisse in einem ersten Fahrbereich durch Ansteuerung der Verstelleinrichtungen der Hydropumpen und in einem zweiten Fahrbereich höherer Fahrgeschwindigkeit durch Ansteuerung der Verstelleinrichtungen der Hydromotoren verstellbar sind. Auch andere Ansteuerungen sind möglich, wie etwa die Ansteuerung der Verstelleinrichtungen der Hydropumpen bei Geradeausfahrt und der Hydromotoren bei Kurvenfahrt.

**Patentansprüche**

1. Steuer und Regelvorrichtung für einen Fahrzeug-Fahrantrieb, der zwei von wenigstens einem Antriebsmotor (1) parallel antreibbare, jeweils wenigstens eine Hydropumpe (12, 13) und einen Hydromotor (14, 15) umfassende hydrostatische Getriebe (3, 4) mit jeweils verstellbarem Übersetzungsverhältnis umfaßt, die mit einer rechten bzw. linken Rad- oder Kettenanordnung (18, 19) des Fahrzeugs in Antriebsverbindung stehen und je wenigstens eine mit Steuersignalen ($v_l$, $v_r$) ansteuerbare Verstelleinrichtung (30, 24; 31, 25) zur Verstellung des Übersetzungsverhältnisses aufweisen,
mit einem Steuerungsteil, der eine Sollwert-Vorgabe (5) sowie eine Signalverarbeitung (42, 43) umfaßt, wobei die Sollwert-Vorgabe zur Vorgabe von Sollwerten des Übersetzungsverhältnisses jedes hydrostatischen Getriebes unter Verwendung je eines verstellbaren Steuerhebels (36, 37) sowie zur Erzeugung entsprechender Sollwertsignale ($s_l$, $s_r$) und die Signalverarbeitung zur Verarbeitung der Sollwertsignale zu den Steuersignalen und Ausgabe derselben ausgebildet ist,
**dadurch gekennzeichnet**, daß die Signalverarbeitung (42, 43) ausgebildet ist zur Durchführung der Signalverarbeitungsschritte
des Bildens eines min./max.-Fensters aus den Sollwertsignalen ($s_l$, $s_r$) nach den Beziehungen:

$$\text{min.} = \text{Minimum} (s_l, s_r)$$

$$\text{max.} = \text{Maximum} (s_l, s_r),$$

wobei das Sollwertsignal ($s_l$ oder $s_r$) mit dem jeweils niedrigeren Wert den Minimalwert und das Sollwertsignal ($s_r$ oder $s_l$) mit dem jeweils höheren Wert den Maximalwert des min./max.-Fensters darstellt, und
des Ermittelns der auszugebenden Steuersignale ($v_l$, $v_r$) nach den Gleichungen:

$$v_l = v_m + (s_l - s_r)$$

$$v_r = v_m + (s_r - s_l),$$

wenn der der Fahrgeschwindigkeit bezogen auf die Längsmittelachse des Fahrzeugs entsprechende Mittelwert $v_m = (v_l + v_r)/2$ der in einem vorhergehenden Signalverarbeitungsschritt ermittelten,

bereits ausgegebenen Steuersignale ($v_l$, $v_r$) innerhalb des min./max.-Fensters liegt, oder

des Korrigierens der im vorhergehenden Signalverarbeitungsschritt ermittelten Steuersignale ($v_l$, $v_r$) zur Ermittlung der auszugebenden Steuersignale ($v_l$, $v_r$) nach den Gleichungen:

$$v_m < \text{min.}: v_l = v_l + (\text{min.} - v_m)$$

$$v_r = v_r + (\text{min.} - v_m)$$

$$v_m = \text{min.}$$

und

$$v_m > \text{max.}: v_l = v_l - (v_m - \text{max.})$$

$$v_r = v_r - (v_m - \text{max.})$$

$$v_m = \text{max.},$$

wenn der Mittelwert ($v_m$) der im vorhergehenden Signalverarbeitungsschritt ermittelten Steuersignale ($v_l$, $v_r$) außerhalb des min./max.-Fensters liegt.

2. Steuer- und Regelvorrichtung nach Anspruch 1, **dadurch gekennzeichnet**, daß die Hydropumpen (12, 13) und/oder Hydromotoren (14, 15) der hydrostatischen Getriebe (3, 4) in ihrem Verdrängungsvolumen verstellbar ausgebildet und mit je einer mit den von der Signalverarbeitung (42, 43) ausgegebenen Steuersignalen ($v_l$, $v_r$, $v_m$) ansteuerbaren Verstelleinrichtung (30, 31; 24, 25) zur Verstellung ihres Verdrängungsvolumens versehen sind.

3. Steuer- und Regelvorrichtung nach Anspruch 1 oder 2, **dadurch gekennzeichnet**, daß die Signalverarbeitung (42, 43) zur Berechnung des Mittelwertes ($v_m$) und der Differenz ($\Delta v$) der ermittelten bzw. korrigierten Steuersignale ($v_l$, $v_r$) und zur Ausgabe entsprechender Signale ($v_m$, $\Delta v$) ausgebildet ist.

4. Steuer- und Regelvorrichtung nach Anspruch 3, **dadurch gekennzeichnet**, daß die Signalverarbeitung (43) zur verzögerten Ausgabe des Steuersignal-Mittelwertes ($v_m$) ausgebildet ist.

5. Steuer- und Regelvorrichtung nach Anspruch 3 oder 4, **gekennzeichnet durch** Ansteuerung der Verstelleinrichtungen (24, 25) der Hydromotoren (14, 15) mit dem von der Signalverarbeitung (43) ausgegebenen Steuersignal-Mittelwert ($v_m$).

6. Steuer- und Regelvorrichtung nach Anspruch 5, **dadurch gekennzeichnet**, daß die Signalverarbeitung (43) ausgebildet ist, den an die Verstelleinrichtungen (24, 25) der Hydromotoren (14, 15) auszugebenden Steuersignal-Mittelwert ($v_m$) bei Überschreiten eines vorgegebenen Wertes der Steuersignal-Differenz ($\Delta v$) in Richtung einer Vergrößerung des Verdrängungsvolumens der Hydromotoren (14, 15) zu korrigieren.

7. Steuer- und Regelvorrichtung nach Anspruch 3, **dadurch gekennzeichnet**, daß die Signalverarbeitung (43) zur unverzögerten Ausgabe der Steuersignal-Differenz ($\Delta v$) ausgebildet ist.

8. Steuer- und Regelvorrichtung nach Anspruch 4 und 7, **dadurch gekennzeichnet**, daß die Signalverarbeitung (43) ausgebildet ist, aus zeitgleichen Werten des verzögerten Steuersignal-Mittelwertes ($v_m$) und der unverzögerten Steuersignal-Differenz ($\Delta v$) entsprechende Steuersignale ($v_l$, $v_r$) zu errechnen und mit diesen die Verstelleinrichtungen (30, 31) der Hydropumpen (12, 13) anzusteuern.

9. Steuer- und Regelvorrichtung nach Anspruch 1, **dadurch gekennzeichnet**, daß die Signalverarbeitung (42,) ausgebildet ist zur Begrenzung der Sollwertsignale ($s_l$, $s_r$) auf je einen Höchstwert ($s_l$ = 0...~90%; $s_r$ = 0...~ 90%) im Bereich von etwa 90% des dem maximalen Verstellweg der Steuerhebel (36, 37) entsprechenden Maximalwertes von 100%.

10. Steuer- und Regelvorrichtung nach wenigstens einem vorhergehenden Anspruch, **dadurch gekennzeichnet**, daß die Signalverarbeitung (42) ausgebildet ist zur Reduzierung der Steuersignale ($v_l$, $v_r$) im gleichen Verhältnis bei Überschreitung eines dem Maximalwert der Sollwertsignale ($s_l$, $s_r$) entsprechenden Maximalwertes nach den Gleichungen:

$$v_l > 1: v_l = 1; v_r = v_r \times 1/v_l$$

$$v_r > 1: v_r = 1; v_l = v_l \times 1/v_r, \text{ und}$$

der Ausgabe der reduzierten Steuersignale ($v_l$, $v_r$).

11. Steuer- und Regelvorrichtung nach wenigstens einem vorhergehenden Anspruch, **dadurch gekennzeichnet**, daß die Signalverarbeitung (42) dazu ausgebildet ist, einen der beiden Steuersignale ($v_l$, $v_r$) auf den Wert Null zu setzen, wenn das entsprechende Sollwertsignal ($s_l$, $s_r$) ein anderes Vorzeichen aufweist, nach den Gleichungen:

$$v_l \leqq 0 \text{ und } s_l \geqq 0 : v_l = 0$$

$$v_r \leqq 0 \text{ und } s_r \geqq 0 : v_r = 0, \text{ und}$$

zur Ausgabe des angehobenen Steuersignals ($v_l$, $v_r$).

12. Steuer- und Regelvorrichtung nach Anspruch 1 mit einer Gleichlaufregelung zur Aufrechterhaltung der vorgegebenen Übersetzungsverhältnisse der hydrostatischen Getriebe beim Auftreten von äußeren Störeinflüssen,
**dadurch gekennzeichnet**, daß die Gleichlaufregelung (44) ausgebildet ist zur Bewertung der gemessenen Ist-Werte der Übersetzungsverhältnisse bzw. der Abtriebsdrehzahlen ($n_{list}$, $n_{rist}$) der hydrostatischen Getriebe (3,4) nach den Gleichungen:

$$n_l = n_{list} \times v_r / v_l \text{ für Rechtskurven}$$

$$n_r = n_{rist} \times v_l / v_r \text{ für Linkskurven,}$$

zur Differenzbildung nach den Gleichungen:

$$\Delta n_l = n_l - n_{rist} \text{ für Rechtskurven}$$

$$\Delta n_r = n_r - n_{list} \text{ für Linkskurven, und}$$

zur Ausgabe der vom Steuerungsteil empfangenen Steuersignale ($v_l$, $v_r$) nach Korrektur derselben mit den Differenzwerten ($\Delta n_l$, $\Delta n_r$), wenn diese größer als Null sind.

13. Steuer- und Regelvorrichtung nach wenigstens einem der Ansprüche 2 bis 12,
mit einer Grenzlastregelung zur Vergrößerung der Übersetzungsverhältnisse der hydrostatischen Getriebe bei Überlastung des Antriebsmotors,
**dadurch gekennzeichnet**, daß die Grenzlastregelung (45) zur Korrektur der von der Signalverarbeitung (42, 43) und/oder der Gleichlaufregelung (44) empfangenen Steuersignale ($v_l$, $v_r$, $v_m$) und zur direkten Ansteuerung der Verstelleinrichtungen (30, 31; 24, 25) der Hydropumpen (12, 13) und/oder der Hydromotoren (14, 15) mit den entsprechend korrigierten Steuersignalen ($v_l$, $v_r$, $v_m$) ausgebildet ist.

14. Steuer- und Regelvorrichtung nach wenigstens einem vorhergehenden Anspruch,
**gekennzeichnet durch** einen programmierbaren Mikrocontroller (6), der die Signalverarbeitung (42, 43), die Gleichlaufregelung (44) und die Grenzlastregelung (45) umfaßt.

**Claims**

1. Control and regulation device for a vehicle travel drive, which comprises two hydrostatic transmissions (3, 4), drivable in parallel by at least one drive motor (1), each comprising at least a hydraulic pump (12, 13) and a hydraulic motor (14, 15) and each with adjustable transmission ratio, which are drivingly connected with a right or left wheel or track arrangement (18, 19) of the vehicle and have each at least one adjustment device (30, 24; 31, 25) controllable by control signals ($v_l$, $v_r$) for the adjustment of the transmission ratio,
having a control section, which comprises a desired-value setting means (5) and a signal processing means (42, 43), whereby the desired-value setting means is formed for setting desired-values of the transmission ratio of each of the hydro-static transmissions, employing respective adjusta-ble control levers (36, 37), and for the generation of corresponding desired-value signals ($s_l$, $s_r$), and the signal processing means is formed for processing the desired-value signals to the control signals and for the output of the control signals,
characterised in that,
the signal processing means (42, 43) is formed for the execution of the signal processing steps of:
forming a min./max.-window from the desired-value signals ($s_l$, $s_r$) in accordance with the relations:

$$min. = minimum (s_l, s_r)$$

$$max. = maximum (s_l, s_r),$$

whereby the desired-value signal ($s_l$ or $s_r$) with in each case the lower value represents the minimum value of the min./max.- window, and the desired-value signal ($s_r$ or $s_l$) with in each case the higher value represents the maximum value of the min./max.- window, and
determining the control signals ($v_l$,$v_r$) to be output, in accordance with the equations

$$v_l = v_m + (s_l - s_r)$$

$$v_r = v_m + (s_r - s_l),$$

if the mean value $v_m = (v_l + v_r)/2$ , corresponding to the speed of travel referred to the longitudinal middle axis of vehicle, of the control signals ($v_l$, $v_r$) deter-mined in a preceding signal processing step and already output lies within the min./max. window, or
correcting the control signals ($v_l$, $v_r$) deter-mined in the preceding signal processing step, for determining the control signals ($v_l$, $v_r$) to be output, in accordance with the equations:

$$v_m < min.: v_l = v_l + (min. - v_m)$$

$$v_r = v_r + (min. - v_m)$$

$$v_m = min.$$

and

$$v_m > max.: v_l = v_l - (v_m - max.)$$

$$v_r = v_r - (v_m - max.)$$

$$v_m = max.$$

if the mean value ($v_m$) of the control signals ($v_l$, $v_r$) determined in the preceding signal processing step lies outside the min./max. Window.

2. Control and regulation device according to claim 1, characterised in that, the hydraulic pumps (12, 13) and/or the hydraulic motors (14, 15) of the hydrostatic transmissions (3, 4) are adjustable in their displacement volume and are equipped with respective adjustment devices (30, 31; 24, 25) controllable by the control signals ($v_l$, $v_r$, $v_m$) output from the signal processing means (42, 43) for the adjusting of their displacement volumes.

3. Control and regulation device according to claim 1 or 2, characterised in that, the signal processing means (42, 43) is formed for calculation of the mean value ($v_m$) and the difference ($\Delta v$) of the determined or corrected control signals ($v_l$, $v_r$) and for the output of corresponding signals ($v_m$, $\Delta v$).

4. Control and regulation device according to claim 3, characterised in that, the signal processing means (43) is formed for the delayed output of the control signal mean value ($v_m$).

5. Control and regulation device in accordance with claim 3 or 4, characterised by control of the adjustment devices (24, 25) of the hydraulic motors (14, 15) with the control signal mean value ($v_m$) output by the signal processing means (43).

6. Control and regulation device according to claim 5, characterised in that, the signal processing means (43) is formed to correct the control signal mean value ($v_m$) to be output to the adjustment devices (24, 25) of the hydraulic motors (14, 15) in the direction of an increase of the displacement volume of the hydraulic motors (14, 15), when a predetermined value of the control signal difference ($\Delta v$) is exceeded.

7. Control and regulation device according to claim 3, characterised in that, the signal processing means (43) is formed for the undelayed output of the control signal difference ($\Delta v$).

8. Control and regulation device according to claims 4 and 7, characterised in that,

the signal processing means (43) is formed to calculate, from contemporaneous values of the delayed control signal mean value ($v_m$) and the undelayed control signal difference ($\Delta v$), corresponding control signals ($v_l$, $v_r$) and to control the adjustment devices (30, 31) of the hydraulic pumps (12, 13) with these control signals.

9. Control and regulation device according to claim 1, characterised in that, the signal processing means (42) is formed for limiting of the desired-value signals ($s_l$, $s_r$) in each case to a highest value ($s_l = 0... \sim 90\%$; $s_r = 0 ... \sim 90\%$) in the region of approximately 90% of the maximum value of 100% corresponding to the maximum adjustment movement of the control levers (36, 37).

10. Control and regulation device according to at least one of the preceding claims, characterised in that, the signal processing means (42) is formed for the reduction of the control signals ($v_l$, $v_r$) in the same proportion, if a maximum value corresponding to the maximum value of the desired-value signals ($s_l$, $s_r$) is exceeded, in accordance with the equations:

$$v_l > 1 : v_l = 1; v_r = v_r \times 1/v_l$$

$$v_r > 1 : v_r = 1; v_l = v_l \times 1/v_r, \text{ and}$$

for the output of the reduced control signals ($v_l$, $v_r$).

11. Control and regulation device according to at least one of the preceding claims, characterised in that, the signal processing means (42) is formed to set one of the two control signals ($v_l$, $v_r$) to the value zero if the corresponding desired-value signal ($s_l$, $s_r$) has a different sign, in accordance with the equations:

$$v_l \leq 0 \text{ and } s_l \geq 0 : v_l = 0$$

$$v_r \leq 0 \text{ and } s_r \geq 0 : v_r = 0, \text{ and}$$

for the output of the raised control signal ($v_l$, $v_r$).

12. Control and regulation device according to claim 1, with a constant running regulation means for the maintenance of the preselected transmission ratios of the hydrostatic transmission upon the occurrence of external disturbances, characterised in that, the constant running regulation means (44) is formed for the evaluation of the measured actual values of the transmission ratios or the output drive speeds of rotation ($n_{list}$, $n_{rist}$) of the hydrostatic transmissions (3, 4) in accordance with the equations:

$$n_l = n_{list} \times v_r/v_l \text{ for right-hand curves}$$

$$n_r = n_{rist} \times v_l / v_r \text{ for left-hand curves}$$

for difference formation in accordance with the equations:

$$\Delta n_l = n_l \cdot n_{rist} \text{ for right-hand curves}$$

$$\Delta n_r = n_r \cdot n_{list} \text{ for left-hand curves, and}$$

for the output of the control signals ($v_l$, $v_r$) received from the control part after correction thereof with the difference values ($\Delta n_l$, $\Delta n_r$), if these are greater than zero.

13. Control and regulation device according to at least one of claims 2 to 12, with a limit load regulation means for increasing the transmission ratios of the hydrostatic transmissions in the case of overloading of the drive motor, characterised in that, the limit load regulation means (45) is formed for the correction of the control signals ($v_l$, $v_r$, $v_m$) received from the signal processing means (42, 43) and/or the constant running regulation means (44) and for the direct control of the adjustment devices (30, 31; 24, 25) of the hydraulic pumps (12, 13) and/or the hydraulic motors (14, 15) with the correspondingly corrected control signals ($v_l$, $v_r$, $v_m$).

14. Control and regulation device according to at least one of the preceding claims, characterised by a programmable microcontroller (6), which comprises the signal processing means (42, 43) the constant running regulation means (44) and the limit load regulation means (45).

## Revendications

1. Dispositif de commande et de régulation pour un mécanisme d'entraînement d'un véhicule automobile, qui comporte deux transmissions hydrostatiques (3, 4) pouvant être entraînées en parallèle par au moins un moteur d'entraînement (1), comportant chacune au moins une pompe hydraulique (12, 13) et un moteur hydraulique (14, 15), avec chaque fois un support de transmission réglable, qui sont en liaison d'entraînement avec un dispositif à roue ou à chaîne (18, 19) droit ou gauche du véhicule et qui comportent chacune au moins un dispositif de réglage (30, 24 ; 31, 25) commandable au moyen de signaux de commande ($v_l$, $v_r$) en vue du réglage du rapport de transmission, avec une partie de commande, qui comprend une sélection de valeur de consigne (5) ainsi qu'un traitement de signal (42, 43), la sélection de valeur de consigne étant conçue pour la sélection de valeurs de consigne de rapport de transmission de chaque transmission hydrostatique par utilisation chacune d'un levier de commande réglable (36, 37) ainsi que pour la production de signaux de valeurs de consigne ($s_l$, $s_r$) et le traitement de signal étant conçu pour le traitement des signaux de valeurs de consigne en signaux de commande et émission de ceux-ci, caractérisé en ce que le traitement de signal (42, 43) est conçu pour la réalisation des étapes de traitement de signal de la formation d'une fenêtre min./max. à partir des signaux de valeurs de consigne ($s_l$, $s_r$) d'après les relations

$$\text{min.} = \text{minimum} (s_l, s_r)$$

$$\text{max.} = \text{maximum} (s_l, s_r)$$

dans lesquelles le signal de valeurs de consigne ($s_l$ ou $s_r$) avec la valeur plus basse représente la valeur minimale et le signal de valeur de consigne ($s_l$ ou $s_r$) avec la valeur plus élevée représente la valeur maximale de la fenêtre min./max. et de la détermination des signaux de commande ($v_l$, $v_r$) à émettre d'après les équations

$$v_l = v_m + (s_l - s_r)$$

$$v_r = v_m + (s_r - s_l)$$

si la valeur moyenne $v_m - (v_l + v_r)/2$ correspondant à la vitesse de marche, rapportée à l'axe médian longitudinal du véhicule, des signaux de commande ($v_l$, $v_r$) déjà émis, déterminés au cours d'une étape de traitement de signal précédente, se situe à l'intérieur de la fenêtre min./max., ou de la correction des signaux de commande ($v_l$, $v_r$) déterminés au cours de l'étape de traitement de signal précédente, en vue de la détermination des signaux de commande ($v_l$, $v_r$) à émettre d'après les équations :

$$v_m < \text{min.} : v_l = v_l + (\text{min.} - v_m)$$

$$v_r = v_r + (\text{min.} - v_m)$$

$$v_m = \text{min.}$$

et

$$v_m > \text{max.} : v_l = v_l - (v_m + \text{max.})$$

$$v_r = v_r - (v_m - \text{max.})$$

$$v_m = \text{max.,}$$

si la valeur moyenne ($v_m$) des signaux de commande ($v_l$, $v_r$), déterminés au cours de l'étape de traitement de signaux précédente, se situe à l'extérieur de la fenêtre min./max.

2. Dispositif de commande et de régulation selon la revendication 1, caractérisé en ce que les pompes hydrauliques (12, 13) et/ou les moteurs hydrauliques (14, 15) des transmissions hydrostatiques (3, 4) sont réglables dans leur volume de déplacement et sont pourvus chacun d'un dispositif de réglage (30, 31 ; 24, 25) commandable au moyen des signaux de commande ($v_l$, $v_r$, $v_m$) émis par le traitement de signal (42, 43), en vue du réglage de leur volume de déplacement.

3. Dispositif de commande et de régulation selon la revendication 1 ou 2, caractérisé en ce que le traitement de signal (42, 43) est conçu pour le calcul de la valeur moyenne ($v_m$) et de la différence ($\Delta v$) des signaux de commande ($v_l$, $v_r$) déterminés ou corrigés et pour l'émission de signaux ($v_m$, $\Delta v$) correspondants.

4. Dispositif de commande et de régulation selon la revendication 3, caractérisé en ce que le traitement de signal (43) est conçu pour l'émission retardée de la valeur moyenne de signal de commande ($v_m$).

5. Dispositif de commande et de régulation selon la revendication 3 ou 4, caractérisé par la commande des dispositifs de réglage (24, 25) des moteurs hydrauliques (14, 15) avec la valeur moyenne de signal de commande ($v_m$) émise par le traitement de signal (43).

6. Dispositif de commande et de régulation selon la revendication 5, caractérisé en ce que le traitement de signal (43) est conçu pour corriger la valeur moyenne de signal de commande ($v_m$) à délivrer aux dispositifs de réglage (24, 25) des moteurs hydrauliques (14, 15) en cas de dépassement d'une valeur donnée de la différence de signal de commande ($\Delta v$) dans le sens d'une augmentation du volume de déplacement des moteurs hydrauliques (14, 15).

7. Dispositif de commande et de régulation selon la revendication 3, caractérisé en ce que le traitement de signal (43) est conçu pour l'émission non retardée de la différence de signal de commande ($\Delta v$).

8. Dispositif de commande et de régulation selon les revendications 4 et 7, caractérisé en ce que le traitement de signal (43) est conçu pour calculer, à partir des valeurs isochrones de la valeur moyenne de signal de commande ($v_m$) retardée et de la différence de signal de commande ($\Delta v$) non retardée, des signaux de commande correspondants ($v_l$, $v_r$) et pour commander avec ceux-ci les dispositifs de réglage (30, 31) des pompes hydrauliques (12, 13).

9. Dispositif de commande et de régulation selon la revendication 1, caractérisé en ce que le traitement de signal (42) est conçu pour la limitation des signaux de valeurs de consigne ($s_l$, $s_r$) chacun à une valeur maximale ($s_l$ = 0 ... à 90 % : $s_r$ = 0 ... à 90 %) de l'ordre d'environ 90 % de la valeur maximale de 100 % correspondant à la distance de réglage maximale des leviers de commande (36, 37).

10. Dispositif de commande et de régulation selon l'une au moins des revendications précédentes, caractérisé en ce que le traitement de signal (42) est conçu pour la réduction des signaux de commande ($v_l$, $v_r$) dans un même rapport, en cas de dépassement d'une valeur maximale, correspondant à la valeur maximale des signaux de valeurs de consigne ($s_l$, $s_r$) d'après les équations :

$$v_l > I : v_l = I ; v_r = v_r \times I/v_l$$

$$v_r > I : v_r = I ; v_l = v_l \times I/v_l \text{ et}$$

pour l'émission des signaux de commande ($v_l$, $v_r$) réduite.

11. Dispositif de commande et de régulation selon l'une au moins des revendications précédentes, caractérisé en ce que le traitement de signal (42) est conçu pour placer sur la valeur zéro l'un des deux signaux de commande ($v_l$, $v_r$), si le signal de valeur de consigne ($s_l$, $s_r$) correspondant présente un autre signe, d'après les équations

$$v_l \leq 0 \text{ et } s_l \gtrless 0 : v_l = 0$$

$$v_r \leq 0 \text{ et } s_r \gtrless 0 : v_r = 0, \text{ et}$$

pour l'émission du signal de commande ($v_l$, $v_r$) relevé.

12. Dispositif de commande et de régulation selon la revendication 1 avec une régulation synchrone pour le maintien des rapports de transmission donnés des transmissions hydrostatiques à l'apparition d'influences extérieures de perturbation, caractérisé en ce que la régulation synchrone (44) est conçue pour l'évaluation des valeurs réelles mesurées des rapports de transmission ou des vitesses de rotation de sortie ($n_{lcons}$, $n_{rcons}$) des transmissions hydrostatiques (3, 4) selon les équations :

$$n_l = n_{lcons} \times v_r/v \text{ pour courbes à droite}$$

$$n_r = n_{rcons} \times v_l \text{ pour courbes à gauche,}$$

en vue de la formation de différence selon les équations :

$$\Delta n_l = n_l - n_{rcons} \text{ pour courbes à droite}$$

$$\Delta n_r = n_r - n_{lcons} \text{ pour courbes à gauche et}$$

en vue de l'émission des signaux de commande ($v_l$, $v_r$) reçus après correction de ceux-ci avec les

valeurs de différence ($\Delta n_l$ et $\Delta n_r$), si celles-ci sont supérieures à zéro.

13. Dispositif de commande et de régulation selon l'une au moins des revendications 2 à 12, avec une régulation de charge limite pour l'augmentation des rapports de transmission des transmissions hydrostatiques en cas de surcharge du moteur d'entraînement, caractérisé en ce que la régulation de charge limite (45) est conçue pour la correction des signaux de commande ($v_l$, $v_r$, $v_m$) reçus par le traitement de signal (42, 43) et/ou la régulation de synchronisme et pour la commande directe des dispositifs de réglage (30, 31 ; 24; 25) des pompes hydrauliques (12, 13) et/ou des moteurs hydrauliques (14, 15) avec les signaux de commande ($v_l$, $v_r$, $v_m$) corrigés en conséquence.

14. Dispositif de commande et de régulation selon l'une au moins des revendications précédentes, caractérisé par un microcontrôleur (6) programmable, qui comprend le traitement de signal (42, 43), la régulation synchrone (44) et la régulation de charge limite (45).

# FIG. 1

# FIG. 2

Istdrehzahl des Antriebsmotors — 10

Solldrehzahl des Antriebsmotors — 9

Abtriebsdrehzahl — 20,21 links / rechts

Regelungsteil

Gleichlauf-Regelung — 44

$n_l$ ist

$n_r$ ist

Grenzlastregler

Pumpenansteuerung links — 30

Pumpenansteuerung rechts — 31 — 45

Potentiometer links — 38

Potentiometer rechts — 39

Signalverarbeitung — 42 — $S_l$, $S_r$, $V_m$, $\Delta V$

Zeit-rampenfunktion — 46

Fahrwert — 47

Lenk-algorithmus — 48 — $V_l$, $V_r$

Quotient — 54 — links / rechts

Bewertung Istdrehzahl — 55

Bewertung Istdrehzahl — 56

PID Gleichlaufregler — 57

Korrektur — 58

Korrektur — 59

Grenzlastregelung

51

52

Sekundärverstellung bei Kurvenfahrt — 50

49

53

Motoransteuerung links — 24

Motoransteuerung rechts — 25

Sollwertvorgabe — 5

erste Signalverarbeitung — 42

zweite Signalverarbeitung — 43

Steuerungsteil

## FIG. 3

100 %
90 %
LR
+ B
36
$s_l - s_r$
$s_l - s_r$
37
37
36
links
rechts
N
0
- B
- 90 %
-100 %
LR
$s_l$          $v_l$          $v_m$          $v_r$          $s_r$
Sollwertsignal
links
Steuersignale
Sollwertsignal
rechts

## FIG. 4

100 %
90 %
36
korrigiert
berechnet nach
den Gleichungen:
$v_l = v_m + kf \times (s_l - s_r)$
$v_r = v_m + kf \times (s_r - s_l)$
links
37
rechts
0
N
- 90 %
-100 %
$s_l$          $v_l$          $v_m$          $v_r$          $s_r$
Sollwertsignal
links
Steuersignale
Sollwertsignal
rechts

FIG. 5

100 %
90 %

korrigiert

36

links

rechts

N

37

0

berechnet nach
den Gleichungen:
$v_l = v_m + kf \times (s_l - s_r)$
$v_r = v_m + kf \times (s_r - s_l)$

- 90 %
- 100 %

$s_l$    $v_l$    $v_m$    $v_r$    $s_r$

Sollwertsignal
links

Sollwertsignal
rechts

Steuersignale

FIG. 6

100 %
90 %

korrigiert nach den Gleichungen:
$v_m < min : v_l = v_l + (min - v_m)$
$v_r = v_r + (min - v_m)$

36

$v_m = min$

min/max
Fenster

links

rechts

37

N

0

berechnet nach den Gleichungen:
$v_l = v_m + kf \times (s_l - s_r)$
$v_r = v_m + kf \times (s_r - s_l)$

- 90 %
- 100 %

$s_l$    $v_l$    $v_m$    $v_r$    $s_r$

Sollwertsignal
links

Sollwertsignal
rechts

Steuersignale